# EUROPÄISCHE PATENTSCHRIFT

(11) **EP 3 417 347 B1**
(45) Veröffentlichungstag und Bekanntmachung des Hinweises auf die Patenterteilung: **24.06.2020**
(21) Anmeldenummer: 17707414.3
(22) Anmeldetag: 20.02.2017
(51) Int. Cl.: G04B 13/00, C22C 14/00, C22C 19/03, C22C 38/00, C25D 7/00, G04B 17/28, C22C 19/07, C22C 30/00, C22C 38/22, C22C 9/00, C23C 18/34, G04B 13/02, G04B 15/14, G04B 17/32, G04B 29/02, G04B 37/22, G04B 43/00, B32B 15/01, G04B 31/008

(54) **RITZELWELLE, UHRWERK, UHR ODER MESSGERÄT OHNE MAGNETISCHE SIGNATUR**
PINION SHAFT, TIMEPIECE, CLOCK OR MEASURING DEVICE WITHOUT MAGNETIC SIGNATURE
ARBRE DE PIGNON, ROUAGE, HORLOGE OU APPAREIL DE MESURE SANS SIGNATURE MAGNÉTIQUE

(30) Priorität: 19.02.2016 EP 16156588
(43) Veröffentlichungstag der Anmeldung: 26.12.2018
(73) Patentinhaber: Creaditive AG, 6362 Stansstad (CH)
(72) Erfinder: GAUGEY, Guillaume, 25300 Doubs (FR)
(74) Vertreter: P&TS SA (AG, Ltd.)
(86) Internationale Anmeldenummer: PCT/IB2017/050954
(87) Internationale Veröffentlichungsnummer: WO 2017/141222

(56) Entgegenhaltungen:
- EP-A1- 1 422 436
- CH-A2- 707 503
- CH-A5- 681 370
- US-A- 3 620 005
- MATTHIAS WOLF: "IWC Ocean 2000 BUND, ZEITZEUGE: Geheimnisträger Jürgen King", IWC WATCH INTERNATIONAL, Nr. 3/0225, 4. September 2006 (2006-09-04) , XP055294291,
- Adrian Van Der Meijden ET AL: "The IWC Ocean Bund Diver's Watch 1", Horological Journal, 1. Januar 2009 (2009-01-01), XP055295100, Gefunden im Internet: URL:http://milspectime.com/wp-content/uplo ads/2013/04/IWC-Bund-Watches_HJ_Adrian1.pd f [gefunden am 2016-09-08]
- Lamineries Matthey Sa: "Phynox", , 1. Januar 2013 (2013-01-01), Seiten 1-3, XP055373106, Gefunden im Internet: URL:http://www.matthey.ch/fileadmin/user_u pload/downloads/fichetechnique/EN/Phynox_C .pdf [gefunden am 2017-05-16]
- Beryllium Science & Technology Association, BeST: "Wrought Copper Beryllium Alloy Compositions", , 31. Januar 2016 (2016-01-31), XP055307617, Gefunden im Internet: URL:https://web.archive.org/web/2016013106 0251/http://beryllium.eu/about-beryllium-a nd-beryllium-alloys/properties-of-berylliu m/properties-of-beryllium-alloys/wrought-c opper-beryllium-alloy-compositions/ [gefunden am 2016-10-04]
- "Engineering Properties of Electroless Nickel Coatings.pdf", , 19. Mai 1983 (1983-05-19), XP055079922, Gefunden im Internet: URL:www.techmetals.com/InternetArticles/En gineering-Properties-of-EN-Coatings.pdf [gefunden am 2013-09-18]
- Adrian Van Der Meijden: "Are Ocean Bunds really rare watches?", IWC.com/forum, 7 March 2012 (2012-03-07), page 2, XP055490761, IWC.com Retrieved from the Internet: URL:https://www.iwc.com/forum/en/discussio n/57566/?page=2 [retrieved on 2018-07-06]

## Beschreibung

### Technisches Gebiet

Die Erfindung bezieht sich auf ein Uhrwerk, eine Uhr und ein Messgerät ohne magnetische Signatur und ein Verfahren und eine Welle zur Herstellung eines solchen.

### Stand der Technik

Es gibt bestimmte Situationen, in denen jedweder Magnetismus unerwünscht oder gar gefährlich ist. So können im Bereich Kampfmittelräumung bereits geringe Magnetfelder genügen, um einen Induktionszünder einer Bombe oder Mine auszulösen. Deshalb verlangt der NATO Standard STANAG 2897 für die Überprüfung amagnetischer Werkzeuge zum Einsatz im Rahmen der Kampfmittelräumung eine gesamte magnetische Signatur von höchstens 5 nT (nano Tesla).

Elektrische oder mechanische Uhren mit Metallteilen des Stands der Technik haben immer eine magnetische Signatur. Die elektrischen Ströme von Digital- oder Quartz-Uhren erzeugen für diese Situationen relativ hohe Magnetfelder und erzeugen somit eine starke magnetische Signatur. Aber selbst rein mechanische Uhren haben aufgrund der verwendeten Metalle immer Restmagnetisierungen, die bereits eine zu starke magnetische Signatur erzeugen. Diese Restmagnetisierungen stammen von im täglichen Leben vorkommenden Magnetfeldern, die metallische Teile magnetisieren, so dass die metallischen Teile nachfolgend auch ohne bestehende Magnetfelder eine Restmagnetisierung aufweisen. Aus diesem Grund können in Magnetfeld-sensiblen Situationen keine Uhren getragen werden.

Der Einfluss einer Uhr auf die Umwelt ist aber ein in der Uhrenindustrie wenig bekanntes Problem, da diese sich nur auf die Problematik der Verringerung des Einflusses von Magnetfeldern auf den Gang einer mechanischen Uhr konzentriert. Bis heute ist keine Armbanduhr bekannt, die den STANAG 2897 Standard erfüllt hat.

Zur Lösung der Problematik der Verringerung des Einflusses von Magnetfeldern auf den Gang einer mechanischen Uhr ist aus DE1932257 bekannt, für einen Teil der beweglichen Teile eines Uhrwerks amagnetische Materialien mit einer magnetischen relativen Permeabilität kleiner 1,01 zu verwenden. Allerdings sind nicht alle Teile des Uhrwerks amagnetisch, so dass die offenbarte Lösung zwar eine gute Funktion der Uhr in einem Magnetfeld bietet, aber nicht verhindern kann, dass die restlichen beweglichen und/oder unbeweglichen Teile der Uhr mit einer Permeabilität grösser 1,01 nach dem Verlassen des Magnetfelds eine Restmagnetisierung aufweisen. Insbesondere wird keine Lösung für für Triebwellen zu verwendende, amagnetische Materialen offenbart.

In US3620005 wird eine amagnetische Triebwelle offenbart, die aus Kunststoffspritzguss, Bronze oder Kupferberyllium hergestellt ist. Die vorgeschlagenen amagnetischen Materialien sind zu weich, um eine ausreichende Qualität der Ganggenauigkeit zu erreichen.

Zusätzlich zu der fehlenden Problematik einer amagnetischen Uhr, würde ein Uhrmacher die Realisierung eines metallischen Uhrwerks ausschliesslich aus amagnetischen Metallen als nicht realisierbar betrachten, da die in der Uhrindustrie bekannten amagnetischen Metalle die zahlreichen Anforderungen wie Verarbeitbarkeit, Verschleiss, Härte, Zusammenspiel mit anderen Teilen, etc., in einem Uhrwerk nicht erfüllen können. Dies betrifft insbesondere die für die Triebwellen benutzten Metalle, aber auch die Vielzahl an Kleinteilen, wie z.B. gefrästen Federn, etc.. So ist zum Beispiel das in US3620005 vorgeschlagen Kupferberyllium für die Triebwellen zu weich, um viele Normen der Schweizer Uhrenindustrie (NIHS) zu erfüllen. So würde zum Beispiel ein von der Norm NIHS 91-10 (in der 2016 geänderten Fassung) vorgeschriebener Stoss die Zähne des Ritzels der Triebwelle verbiegen. Auch sind die in der Mechanik des Uhrwerks wirkenden Kräfte zu gross für eine Triebwelle aus Kupferberyllium, so dass die Zapfen und der Eingriffsbereich der Zähne des Ritzels innerhalb kurzer Zeit abgenutzt werden und die von NIHS Normen geforderte Ganggenauigkeit nicht mehr erfüllt wäre. So würde eine solche Uhr aufgrund dieser Abnutzungserscheinungen sehr schnell nicht mehr die NIHS90-10 Norm (in der von 2003 geänderten Fassung) für amagnetische Uhren, die eine Ganggenauigkeit von 30 Sekunden pro Tag fordert, erfüllen und dies unabhängig davon, ob die Uhr einem Magnetfeld ausgesetzt wird oder nicht. Es ist somit bis heute keine Armbanduhr bekannt, welche die STANAG2897 Norm erfüllt und gleichzeitig die NIHS91-10 Norm der Stossfestigkeit erfüllt und/oder die in manchen Normen, wie der NHIS90-10 für amagnetische Uhren, geforderte Ganggenauigkeit nach einer Laufzeit von 6 Monaten aufweist.

In den Artikeln «IWC Ocean 2000 BUND, ZEITZEUGE: Geheimnisträger Jürgen King» von Matthias Wolf, veröffentlich in IWC WATCH INTERNATIONAL, Nr. 3/0225, am 4.9.2006 und «The IWC Ocean Bund Diver's Watch 1» von Adrian Van Der Meijden et al, veröffentlicht in Horological Journal 1, am 1.1.2009 wurde eine Uhr beschrieben, die angeblich dem in dem Nato Standard 2897 beschriebenen amagnetischen Verhalten genügt. Diese Uhr wurde aber ausschliesslich an das deutsche Militär verkauft, und IWC ist zu Stillschweigen über die technische Ausführung dieser Uhr verpflichtet. Diese Artikel offenbaren keine ausführbare technische Lehre, um eine solche Uhr herzustellen.

Ähnliche Probleme treten bei anderen Messinstrumenten, wie z.B. Tiefenmesser, Druckmesser, Geschwindigkeitsmesser, Höhenmesser, auf.

### Darstellung der Erfindung

Deshalb ist es ein Ziel, ein Uhrwerk, eine Uhr, ein Messinstrument und eine Welle zu finden, dessen Einfluss auf die Umwelt minimal ist.

Dieses Ziel wird durch eine Welle, ein Uhrwerk, eine Uhr, ein Messgerät und ein Verfahren zur Herstellung eines mechanischen Uhrwerks nach den unabhängigen Ansprüchen erreicht.

Durch die ausschliessliche Verwendung von Einzelteilen, die eine relative magnetische Permeabilität kleiner als 1,01 haben, ist kein Teil des Uhrwerks oder der Uhr oder des Messinstruments in einem Magnetfeld magnetisierbar. Somit zeigt ein solches Uhrwerk selbst nach dem Aussetzen von hohen Magnetfeldern keine Restmagnetisierungen. Dadurch wird der Einfluss des Uhrwerks auf die Umwelt reduziert. Eine Welle des Uhrwerks, der Uhr oder des Messinstruments ist aus Berylliumkupfer hergestellt und mit einer die Härte des Berylliumkupfers vergrössernden Beschichtung gehärtet. Diese Metalllegierung ist amagnetisch und weich genug, um die für Uhrwerke komplexen Formen der Welle in einer Uhr zu spanen oder fräsen. Durch die vorzugsweise nachfolgende Härtung des Materials mit einer amagnetischen Beschichtung wird einerseits die magnetische Eigenschaft der Welle nicht verschlechtert und andererseits die notwendige Härte erreicht, um die Erfordernisse für Verschleiss, Reibung und Ganggenauigkeit des Uhrwerks zu erfüllen. Dieses in der Uhrmacherei unbekannte Material zeichnet sich durch seine Amagnetizität, seine gute Verarbeitbarkeit und seine Härte aus.

Weitere vorteilhafte Ausführungsformen sind in den abhängigen Ansprüchen angegeben.

In einem Ausführungsbeispiel ist die Beschichtung eine Nickelschicht.

In einem Ausführungsbeispiel ist mindestens ein Teil des Uhrwerks, der Uhr oder des Messinstruments aus einer Legierung hergestellt, die als Hauptbestandteile Kobalt, Chrom, Eisen und Nickel aufweist. Dieses in der Uhrmacherei aufgrund der schlechten Verarbeitbarkeit nicht verwendete Material zeichnet sich durch seine Amagnetizität und seine für die oben genannten Teile guten Materialeigenschaften aus. Das mindestens eine Teil aus dieser Legierung ist vorzugsweise eines oder mehrere einer Feder, eines Hemmungsrads, eines Hemmstücks, eines Spiralklötzchenhalters, einer Brücke, insbesondere einer Tourbillonkäfigbrücke, und/oder eines Tourbillons (oder Teile dieses) des Uhrwerks. Insbesondere der Tourbillonkäfig eines Tourbillons sind vorteilhafterweise aus dieser Legierung hergestellt. Federn, Hemmungsräder, Hemmstücke, Brücken, Spiralklötzchen und/oder Tourbillons für Uhrwerke oder andere Teile aus dieser Legierung können auch in anderen Uhrwerken oder Messinstrumenten als den oben beschriebenen Uhrwerken oder Messinstrumenten Verwendung finden.

In einem Ausführungsbeispiel ist mindestens ein Teil des Uhrwerks, der Uhr oder des Messinstruments aus einem amagnetischen Edelstahl hergestellt. Der amagnetische Edelstahl weist vorzugsweise mehr als 10%, vorzugsweise mehr als 15% Chrom auf. Das mindestens eine Teil ist zum Beispiel die Aufzugswelle des Uhrwerks. Dieses Material hat den Vorteil rostfrei zu sein und hohe Kräfte auszuhalten. Aufgrund der schwierigen Verarbeitbarkeit werden amagnetische Edelstähle in der Uhrmacherei normalerweise nicht verwendet.

In einem Ausführungsbeispiel weist das Uhrwerk oder das Messinstrument ein Gehäuse aus Titan auf.

In einem Ausführungsbeispiel weist das Uhrwerk mindestens ein Zahnrad und/oder ein Federhaus auf, das aus einer Kupferlegierung, insbesondere aus einer Kupferlegierung, aufweisend 7,5 Prozent Nickel und 5 Prozent Zinn, hergestellt ist.

In einem Ausführungsbeispiel weist das Uhrwerk eine Platine und mindestens eine Brücke auf, die aus Messing hergestellt sind.

### Figurenbeschreibung

Die Erfindung wird mit Hilfe der nachfolgenden Figuren näher beschrieben:
Fig. 1 zeigt einen Schnitt durch ein Ausführungsbeispiel eines Uhrwerks;
Fig. 2 zeigt einen ersten vergrösserten Ausschnitt der Fig. 1;
Fig. 3 zeigt einen zweiten vergrösserten Ausschnitt der Fig. 1;
Fig. 4 zeigt eine dreidimensionale Ansicht eines Ausführungsbeispiels der Antriebswelle;
Fig. 5 zeigt einen Schnitt durch ein Ausführungsbeispiel der Antriebswelle;
Fig. 6 zeigt eine dreidimensionale Ansicht eines Ausführungsbeispiels der Unruhewelle;
Fig. 7 zeigt einen Schnitt durch ein Ausführungsbeispiel der Unruhewelle;
Fig. 8 zeigt eine dreidimensionale Ansicht eines Ausführungsbeispiels einer Ritzelwelle;
Fig. 9 zeigt einen Schnitt durch ein Ausführungsbeispiel der Ritzelwelle;
Fig. 10 zeigt eine dreidimensionale Ansicht eines Ausführungsbeispiels der Hemmstückwelle;
Fig. 11 zeigt einen Schnitt durch ein Ausführungsbeispiel der Hemmstückwelle;

### Wege zur Ausführung der Erfindung

Nachfolgend wird beschrieben wie es gelungen ist, eine Uhr, ein Uhrwerk und eine Welle für ein Uhrwerk herzustellen, die bzw. deren Einzelteile eine relative magnetische Permeabilität kleiner als 1,01 hat bzw. haben. Die Realisierung geht dabei soweit, dass alle Einzelteile eine relative magnetische Permeabilität kleiner als 1,0100 haben. Vorzugsweise ist die relative magnetische Permeabilität zwischen 0,99 und 1,01 bzw. 1,0100. Vorzugsweise handelt es sich bei der Uhr um eine Armband- oder Taschenuhr, wobei dieses Uhrwerk aber auch in anderen Uhren verbaut werden kann. Wenn im Folgenden von einem amagnetischen Material oder Teil gesprochen wird, ist damit ein Material oder Teil mit einer relativen magnetischen Permeabilität kleiner als 1,01, vorzugsweise kleiner 1,0100 gemeint.

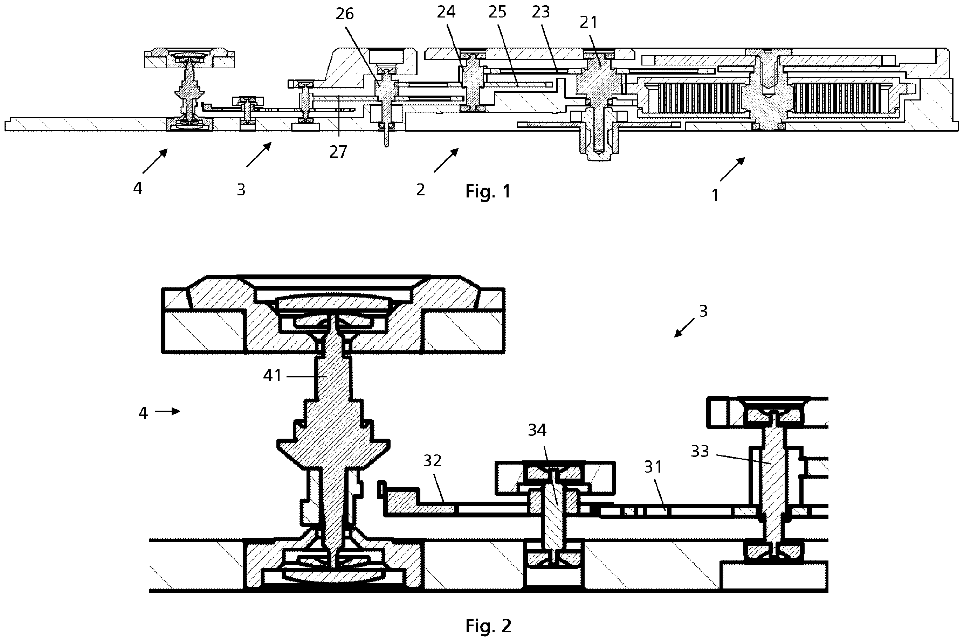

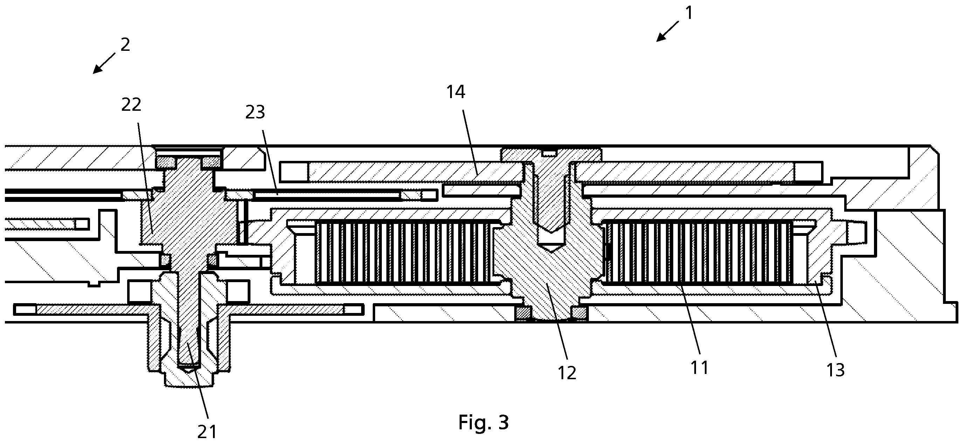

Das Uhrwerk weist ein Gehwerk und optionale Zusatzwerkwerke auf. Fig. 1 zeigt einen Schnitt durch ein Ausführungsbeispiel eines solchen Uhrwerks, während Fig. 2 und 3 vergrösserte Ausschnitte aus Fig. 1 zeigen.

Das Gehwerk weist einen Antriebsmechanismus 1, ein Räderwerk 2, ein Hemmungssystem 3 und ein Schwingsystem 4 auf.

Der Antriebsmechanismus 1 speichert die Energie für den Betrieb des Uhrwerks und ist so mit dem Räderwerk 2 gekoppelt, dass er diese Energie an das Räderwerk 2 abgibt. Der Antriebsmechanismus 1 weist dafür einen Energiespeicher und einen Aufzugsmechanismus auf. Vorzugsweise ist der Energiespeicher eine Antriebsfeder 11, vorzugsweise in Form einer Spiralfeder. Die Antriebsfeder 11 ist vorzugsweise aus dem amagnetischen Material Nivaflex (registrierte Marke) hergestellt. Diese spiralförmige Antriebsfeder 11 ist vorzugsweise zwischen einer Antriebswelle 12 und einem auf der Antriebswelle 12 drehbar gelagerten Federhaus 13 angeordnet. Durch den Aufzugsmechanismus kann die Antriebswelle 12 gedreht werden und die Antriebsfeder 11 aufgezogen werden. Der Aufzugsmechanismus weist vorzugsweise eine Aufzugswelle und/oder einen automatischen Aufzugsmechanismus mit einem Automatikgetriebe und einer Schwungmasse auf. In Fig. 1 und Fig. 3 ist das Zahnrad 14 des Aufzugsmechanismus gezeigt, welches die Antriebswelle 12 dreht.

Das Räderwerk 2 weist eine Kombination von Wellen, Ritzeln (Trieben) und Zahnrädern auf, die den Antriebsmechanismus 1, insbesondere einen Zahnkranz an der Umfangsseite des Federhauses 13, mit einem bestimmten Übersetzungsverhältnis mit dem Hemmungssystem 3 verbindet. Jede der Wellen, die mindestens ein Ritzel aufweist, wird auch als Ritzelwelle bezeichnet. Vorzugsweise ist das mindestens eine Ritzel und die Welle der Ritzelwelle aus einem Materialblock gespant, vorzugsweise gefräst, während das Zahnrad drehfest auf der Ritzelwelle oder der Welle verbunden ist. Eine Eingangsritzelwelle 21 des Räderwerks 2 ist mit seinem Ritzel 22 mit dem Antriebsmechanismus 1 verbunden, während ein Zahnrad 27 einer Ausgangswelle 26 des Räderwerks 2 in das Hemmungssystem 3 eingreift. Das Räderwerk 2 weist zum Beispiel drei Wellen 21, 24, 26 und drei auf diesen Wellen 21, 24, 26 befestigten Zahnräder 23, 25, 27 auf. Allerdings sind auch komplexere oder einfachere Räderwerke mit mehr oder weniger Wellen und Rädern möglich.

Das Hemmungssystem 3 ist zwischen dem Räderwerk 2 und dem Schwingsystem 4 angeordnet, so dass das Räderwerk 2 beim Durchlaufen jeder von dem Schwingsystem 4 vorgegebenen Schwingung um einen vorbestimmten Drehwinkel weitergedreht wird. Das Hemmungssystem 3 weist vorzugsweise ein Hemmungsrad 31 und ein Hemmstück 32, z.B. einen Anker, auf. Das Hemmungsrad 31 ist drehfest auf einer Hemmungsradwelle 33 befestigt und über die drehbar gelagerte Hemmungsradwelle 33 drehbar. Ein Ritzel der Hemmungsradwelle 33 ist mit dem Zahnrad 27 der Ausgangswelle 26 des Räderwerks 2 verbunden. Das Hemmstück 32 ist drehfest auf einer Hemmstückwelle 34 befestigt und über die drehbar gelagerte Hemmstückwelle 34 drehbar. Das Hemmstück 32 hemmt die durch die Antriebsfeder 11 verursachte Drehung des Hemmungsrads 31 und gibt das Hemmungsrad 31 ein oder zweimal pro Schwingung des Schwingsystems 4 für die Drehung des Hemmungsrads 31 bzw. des Räderwerks 2 um den vorbestimmten Drehwinkel frei. Auf dem Hemmstück 32 sind vorzugsweise an den Kontaktstellen mit dem Hemmungsrad 31 Paletten aus Edelstein, vorzugsweise aus (synthetischen) Rubin angeordnet. Die Paletten können aber auch aus einem Metall, z.B. aus dem später beschriebenen Phynox oder Silizium hergestellt werden. Die Paletten können auch aus einem Block mit dem Hemmstück 32 als eine Einheit hergestellt werden. Je nach Hemmungsmechanismus kann das Hemmstück 32 auch aus mehreren relativ zueinander drehbaren Teilen bestehen und/oder das Hemmungsrad 31 auch aus mehreren relativ zueinander drehbaren Teilen bestehen.

Das Schwingsystem 4 schwingt mit einem konstanten Takt und löst ein oder zwei Mal pro Schwingung das Hemmungssystem 3 bzw. das Hemmstück 32 aus, um so die vorbestimmte Drehung des Räderwerks 2 bzw. des Hemmungsrads 31 zu verursachen. Vorzugsweise weist das Schwingsystem 4 eine drehbar gelagerte Unruhewelle 41, eine (nicht dargestellte) Spiralfeder und eine (nicht dargestellte) Unruhemasse auf. Auf der Unruhewelle 41 ist in der Regel ein Plateau mit einer Ellipse ausgebildet. Die Unruhewelle 41 und das Plateau oder das Plateau und die Ellipse oder alle drei können aus einem Materialblock als Einheit hergestellt werden. Allerdings ist es auch möglich alle drei Teile aus drei Materialblöcken herzustellen. In einem Ausführungsbeispiel ist das Plateau aus dem später beschriebenen gehärteten Berylliumkupfer, aus Silizium, aus dem später beschriebenen Declafor, aus dem später beschriebenen Phynox oder aus Nivaflex hergestellt. Ein Plateau aus Phynox oder Silizium könnte die Ellipse aus dem gleichen Materialblock ausbilden. Die Ellipse ist aus einem Edelstein, vorzugsweise einem (synthetischen) Rubin, Silizium oder dem später beschriebenen Phynox hergestellt. Die Unruhemasse ist z.B. aus dem später beschriebenen Declafor, aus dem später beschriebenen gehärteten Berylliumkupfer oder Messing hergestellt.

Vorzugsweise sind die beschriebenen (und nicht beschriebenen) Wellen zur drehbaren Lagerung von Teilen aus einer gehärteten Kupferlegierung hergestellt. Die Kupferlegierung ist vorzugsweise ein Berylliumkupfer. Das Berylliumkupfer weist vorzugsweise Blei auf. Die Kupferlegierung besteht vorzugsweise aus 1,8 % bis 2 % Beryllium (Be), 0,2 % bis 0,6 % Blei (Pb), aus weniger als 1,1 % andere Materialien und ansonsten aus Kupfer (Cu). Die weniger als 1,1 % andere Materialien weisen vorzugsweise ein Gesamtgehalt von Kobalt (Co) und Nickel (Ni) von mindestens 0,2 %, einen Gesamtgehalt von Kobalt (Co) und Nickel (Ni) und Eisen (Fe) von maximal 0,6 % und maximal 0,5 % andere Materialien auf (Prozentangaben relativ zum Gesamtgewicht der Legierung). Die hier und im Folgenden gemachten Prozentangaben des Materialgehalts einer Legierung beziehen sich dabei immer auf die Gewichtsprozente sofern nicht anders erwähnt. Aus einem Materialblock dieser Kupferlegierung wird die gewünschte Welle gespant, vorzugsweise gedreht und gefräst. Zum Erreichen einer Oberflächengüte mit geringer Rautiefe wird vorzugsweise ein Diamant als Schneidwerkzeug verwendet. Aufgrund der Härte des Materials von nur ca. 380 HV (Vickerhärte) lässt sich dieses Material gut bearbeiten, was insbesondere für nicht rotationssymmetrische Elemente wie auf einer Ritzelwelle ausgebildete Ritzel wichtig ist. Nach dem Formen der gewünschten Welle findet vorzugsweise noch ein Polierschritt, vorzugsweise ein mechanisch-chemischer Polierschritt statt. Daraufhin wird die aus der Kupferlegierung geformte Welle durch Auftragen einer amagnetischen Schicht aus einem zweiten Material (bzw. ein sich von dem Berylliumkupfer unterscheidendes Material) gehärtet. Vorzugsweise ist dieses zweite Material ein amorphes Metall (auch metallisches Glas genannt). Vorzugsweise ist die aufgetragene Beschichtung dicker als 0,5 µm (Mikrometer), vorzugsweise dicker als 2,5 µm, vorzugsweise dicker als 5 µm, vorzugsweise dicker als 7µm. Vorzugsweise ist die härtende Schicht aus dem zweiten Material zumindest im Bereich der Zapfen und/oder für eine Ritzelwelle im Bereich der Zähne des Ritzels aufgetragen. Im einfachsten Fall, ist die ganze Welle von der Beschichtung aus dem zweiten Material eingeschlossen. Vorzugsweise werden die mit dem zweiten Material beschichteten Wellen einer Ausscheidungshärtung (Durcissement structural) unterzogen, um so die Teile bzw. die Beschichtung noch härter zu machen. Dies wird in der Regel durch eine Wärmebehandlung gemacht. Als amagnetische Schicht wird vorzugsweise Nickel verwendet. Diese Schicht kann z.B. durch eine Galvanisierung und/oder chemisches Vernickeln aufgetragen werden. Eine Nickelschicht ist in der Uhrenindustrie als magnetisches Material bekannt und wird nicht als amagnetisches Material verwendet. Allerdings ist es möglich Nickel als eine amagnetische Schicht herzustellen und aufzutragen. Dies kann zum Beispiel durch eine amorphe Nickelschicht erreicht werden. Zusätzlich oder alternativ kann die amagnetische Schicht auch durch einen Phosphorgehalt in der Nickelschicht erzielt werden, vorzugsweise durch einen Phosphorgehalt grösser als 10%. Zusätzlich oder alternativ kann die amagnetische Schicht auch durch ein chemisches Vernickeln erzielt werden. Durch diese Nickelbeschichtung kann eine Härte von mehr als 600 HV, vorzugsweise mehr als 700 HV, vorzugsweise mehr als 800 HV erreicht werden. Die geformte Welle aus der beschriebenen Kupferlegierung mit der chemischen Vernickelung mit einer Dicke von 3 µm wird eine Härte von ca. 900 HV erreicht. Eine so hergestellte Welle vereint optimal die Eigenschaften der guten Formung der Welle vor der Beschichtung, der für einen verschleissarmen und ganggenauen Betrieb des Uhrwerks notwendigen Härte der Welle nach der Beschichtung und der amagnetischen Eigenschaft der Welle.

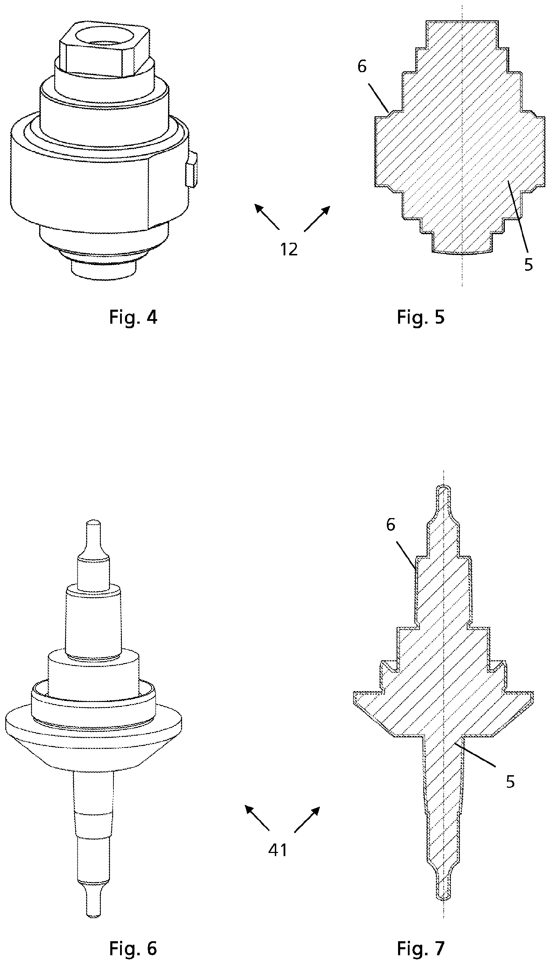

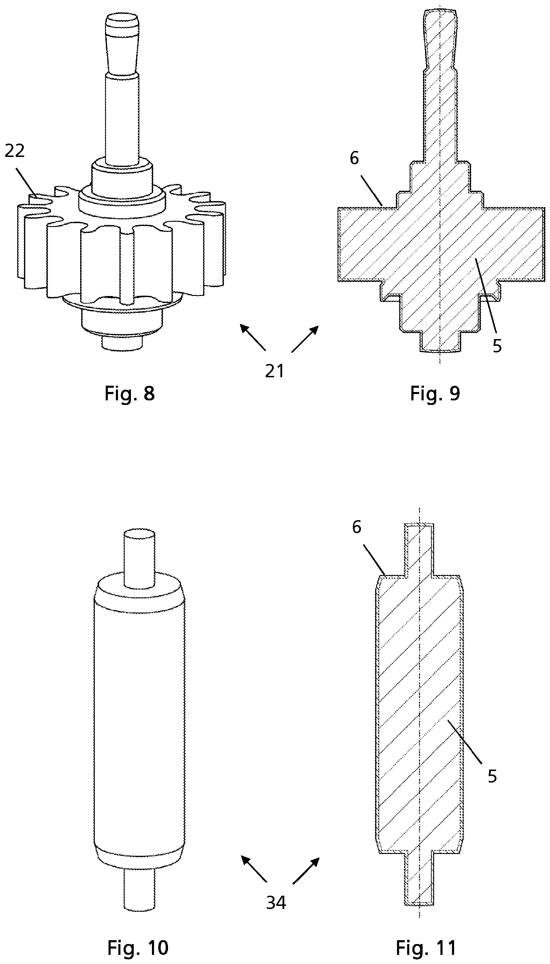

Beispiele der Antriebswelle 12 (Fig. 4 und 5), der Unruhewelle 41 (Fig. 6 und 7), der zentralen Ritzelwelle 21 (Fig. 8 und 9) und der Hemmstückwelle 34 (Fig. 10 und 11) aus dem zur Härtung Beschichteten Berylliumkupfer sind in den Fig. 4 bis 11 gezeigt. Dabei ist der Kern 5 der jeweiligen Welle in der jeweiligen Form aus einem Materialblock aus Berylliumkupfer hergestellt. Dieser Kern 5 ist daraufhin mit einer amagnetischen Beschichtung 6, vorzugsweise Nickel, beschichtet.

In einem anderen Ausführungsbeispiel ist mindestens eine der beschriebenen (und nicht beschriebenen) Wellen aus einem anderen amagnetischen Material als Kupferberyllium hergestellt und mit der beschriebenen härtenden amagnetischen Nickelbeschichtung beschichtet.

Einige oder alle der Wellen sind vorzugsweise auf Edelsteinen, vorzugsweise (synthetischen) Rubinen gelagert. Die Wellen sind vorzugsweise zwischen einer Platine und einer Brücke drehbar gelagert. Die Platine und die Brücke werden vorzugsweise aus Messing, vorzugsweise aus CuZn38Pb2 hergestellt. Das Messing wird entweder wie zuvor für die Wellen beschrieben durch eine Beschichtung, insbesondere eine Nickelbeschichtung, gehärtet oder durch eine Vergoldung geschützt.

Vorzugsweise ist/sind mindestens eine Welle, insbesondere die Aufzugswelle, und/oder die Krone vorzugsweise aus einem amagnetischen Edelstahl hergestellt. Solche Edelstähle sind sehr selten und sehr schwer bearbeitbar und deshalb in der Uhrenbranche bisher unbekannt. Solche Edelstahle werden zum Beispiel in der Medizintechnik verwendet. Vorzugsweise weist ein solcher amagnetischer Edelstahl einen Chromium (Cr) Anteil von mehr als 10%, vorzugsweise mehr als 15 % auf. Ein Beispiel ist der Edelstahl X2CrNiMo18-15-3 (DIN Kurzbezeichnung) bestehend aus maximal 0,03 % Kohlenstoff (C), maximal 0,75% Silizium (Si), maximal 2% Mangan (Mn), maximal 0,025% Phosphor (P), maximal 0,003 % Schwefel (S), zwischen 17% und 19% Chrom (Cr), zwischen 2,7 und 3 % Molybdenum (Mo), zwischen 13% und 15% Nickel (Ni), maximal 0,5% Kupfer (Cu), maximal 0,1 % Stickstoff und ansonsten Eisen (Fe). Ein alternatives Beispiel für einen solchen amagnetischen Edelstahlt mit Chrom ist der unter dem Markennamen Biodur 108 bekannte Edelstahl (UNS S 29108) bestehend aus maximal 0,08 % Kohlenstoff (C), maximal 0,75% Silizium (Si), zwischen 21 % und 24 % Mangan (Mn), maximal 0,03% Phosphor (P), maximal 0,01 % Schwefel (S), zwischen 19% und 23% Chrom (Cr), zwischen 0,5 und 1,5 % Molybdenum (Mo), maximal 0,1% Nickel (Ni), maximal 0,25% Kupfer (Cu), maximal 0,9 % Stickstoff (N) und ansonsten Eisen (Fe).

Das Hemmstück, das Hemmungsrad und die in dem Uhrwerk verwendeten Federn (sofern nicht explizit anders beschrieben) werden aus einer Legierung hergestellt, die als Hauptbestandteile Eisen, Nickel, Chrom und Kobalt (vorzugsweise auch Molybdän und Mangan) aufweist. Vorzugsweise besteht die Legierung aus den folgenden Elementen: zwischen 39 und 41 Prozent Kobalt (Co), zwischen 19 und 21 Prozent Chrom (Cr), zwischen 15 und 18 Prozent Nickel (Ni), zwischen 6,5 und 7,5 Prozent Molybdän (Mo), zwischen 1,5 und 2,5 Prozent Mangan (Mn), weniger als 3 Prozent sonstige Materialien und einem Restgehalt von Eisen. Vorzugsweise enthalten die weniger als 3% sonstige Materialien weniger als 0,15 % Kohlenstoff (C), weniger als 1,2 % Silicium (Si), weniger als 0,001 Beryllium (Be), weniger als 0,015 % Phosphor (P), weniger als 0,015 Schwefel (S) (Prozentangaben relativ zum Gesamtgewicht der Legierung). Dieses Material wird auch als Phynox (registrierte Marke) bezeichnet. Vorzugsweise werden die aus diesem Material geformten Teile vor, während und/oder nach der Formgebung einer Ausscheidungshärtung (Durcissement structural) unterzogen, um so die Teile härter zu machen. Damit können trotz der Verwendung von amagnetischen Materialien Härten von über 500 HV, insbesondere ca. 600 HV erreicht werden. Vorzugsweise werden die Teile vor dem Härten einer Grobformung, z.B. durch eine CNC Fräse, unterzogen und nach dem Härten einer Feinformung unterzogen. Danach werden die geformten und gehärteten Teile vorzugsweise noch einer mechanisch chemischen Polierung unterzogen.

Das Hemmstück und das Hemmungsrad können alternativ auch aus Silizium hergestellt werden.

Auch die Schrauben, die normalerweise aus Stahl hergestellt werden, können in einer amagnetischen Uhr nicht verwendet werden. Deshalb werden die Schrauben aus einer Titanlegierung hergestellt. In einem Ausführungsbeispiel wird die so genannten Titan grade 5 Legierung (3.7165 / DIN TiAl6V4) verwendet, die neben Titan aus zwischen 5,5% und 6,75% Aluminium (Al), zwischen 3,5% und 4,5% Vanadium und weniger als 2% andere Materialien besteht. Vorzugsweise enthalten die weniger als 2% sonstige Materialien weniger als 0,3 % Eisen (Fe), weniger als 0,2 % Sauerstoff (O), weniger als 0,05 % Stickstoff (N), weniger als 0,08 % Kohlenstoff (C), weniger als 0,015 % Wasserstoff (H) (Prozentangaben relativ zum Gesamtgewicht der Legierung). Vorzugsweise werden die aus diesem Material geformten Teile vor, während und/oder nach der Formgebung einer Ausscheidungshärtung unterzogen, um so die Teile härter zu machen. Damit können trotz der Verwendung von amagnetischen Materialien Härten von über 250 HV, insbesondere ca. 350 HV erreicht werden. Danach werden die geformten und gehärteten Teile vorzugsweise noch einer mechanisch chemischen Polierung unterzogen.

Das Federhaus und die Zahnräder des Räderwerks sind vorzugsweise aus Declafor (registrierte Marke) hergestellt, d.h. einer Kupferlegierung mit Nickel und Zinn, genauer einer Kupferlegierung bestehend aus 7,5% Nickel (Ni), 5 % Zinn (Sn), weniger als 1,85 % andere Materialien und ansonsten Kupfer (Cu). Die weniger als 1,85 % andere Materialien weisen zum Beispiel zwischen 0,05 % und 0.3 % Mangan (Mn), maximal 0,5 % Zink (Zn), maximal 0,5 % Eisen (Fe), maximal 0,03 % Blei (Pb), maximal 0,02 % Phosphor (P) und maximal 0,5 % andere Materialen auf. Vorzugsweise werden die aus diesem Material geformten Teile vor, während und/oder nach der Formgebung einer Ausscheidungshärtung unterzogen, um so die Teile härter zu machen. Damit können trotz der Verwendung von amagnetischen Materialien Härten von über 250 HV, insbesondere ca. 320 HV erreicht werden. Danach werden die geformten und gehärteten Teile vorzugsweise noch einer mechanisch chemischen Polierung und/oder einer Vergoldung unterzogen.

Das beschriebene Uhrwerk ist vorzugsweise in einer Uhr verbaut, insbesondere in einer Armband- oder Taschenuhr. Wenn das Gehäuse und/oder das Armband aus einem metallischen Material hergestellt sind, so wird dafür vorzugsweise eine Titanlegierung, wie z.B. die oben beschriebene, verwendet.

Mit den hier beschriebenen Materialien ist es gelungen eine Armbanduhr zu bauen, die die STANAG2897 Norm erfüllt und gleichzeitig die NIHS91-10 Norm der Stossfestigkeit erfüllt. Desweiteren wurde nachgewiesen, dass eine solche Uhr selbst nach 10 Minuten in einem Magnetfeld von 100.000 Gauss noch eine von der NHIS 90-10 Norm geforderte Gangungenauigkeit von weniger als 30 Sekunden pro Tag hat.

Es wurde ein Ausführungsbeispiel einer Uhr beschrieben. Allerdings lässt sich die Erfindung auf jedes andere Messinstrument mit mechanischen Funktionsteilen wie einem Räderwerk, einem Getriebe, Zeigern, Wellen, Ritzelwellen analog übertragen. Beispiele für solche Messinstrumente sind Tiefenmesser, Druckmesser, Geschwindigkeitsmesser, Höhenmesser.

## Patentansprüche

1. Welle aus Metall für ein mechanisches Uhrwerk oder Messinstrument mit einer relativen magnetischen Permeabilität kleiner als 1,01, wobei die Welle (12, 21, 24, 26, 33, 34, 41) aus einem Berylliumkupfer (5) hergestellt ist, **dadurch gekennzeichnet, dass** die Welle (12, 21, 24, 26, 33, 34, 41) mit einer die Härte des Berylliumkupfers (5) vergrössernden auf das Berylliumkupfer (5) aufgetragenen Beschichtung (6) beschichtet ist.

2. Welle nach Anspruch 1, wobei das Berylliumkupfer (5) mindestens 0,2 % Blei aufweist.

3. Welle nach Anspruch 1 oder 2, wobei die Beschichtung (6) eine Nickelschicht ist.

4. Welle nach Anspruch 3, wobei die Nickelschicht einen Phosphoranteil von mehr als 10% aufweist.

5. Welle nach einem der Ansprüche 1 bis 4, wobei die Nickelschicht eine chemische Nickelschicht ist.

6. Welle nach einem der Ansprüche 1 bis 5, wobei die Beschichtung (6) ein amorphes Metall ist.

7. Welle nach einem der Ansprüche 1 bis 6, wobei die Welle eine Ritzelwelle (21, 24, 26, 33) ist.

8. Welle nach Anspruch 7, wobei die Ritzelwelle (21, 24, 26, 33) ein Ritzel (22) und eine Welle aufweist, wobei das Ritzel (22) und die Welle der Ritzelwelle (21, 24, 26, 33) eine aus einem Materialblock hergestellte Einheit bilden.

9. Welle nach einem der Ansprüche 1 bis 8, wobei die Welle (12, 21, 24, 26, 32, 33, 41) eine Unruhewelle (41) zur drehbaren Lagerung der Unruhe, einer Hemmstückwelle (34) zur drehbaren Lagerung des Hemmstücks (32), einer Antriebswelle (12) zur drehbaren Lagerung des Antriebmechanismus (1) oder einer Aufzugswelle zur drehbaren Lagerung des Aufziehmechanismus ist.

10. Mechanisches Uhrwerk mit metallischen Teilen, wobei jedes Teil des mechanischen Uhrwerks eine relative magnetische Permeabilität kleiner als 1,01 aufweist, wobei das mechanische Uhrwerk mindestens eine Welle (12, 21, 24, 26, 33, 34, 41) nach Anspruch 1 aufweist.

11. Mechanisches Uhrwerk nach Anspruch 10, wobei das Berylliumkupfer (5) der Welle (12, 21, 24, 26, 33, 34, 41) mindestens 0,2 % Blei aufweist.

12. Mechanisches Uhrwerk nach einem der Ansprüche 10 bis 11, wobei die Beschichtung (6) eine Nickelschicht ist.

13. Mechanisches Uhrwerk nach einem der Ansprüche 10 bis 12, wobei mindestens ein Teil, insbesondere eine Feder, ein Hemmungsrad, ein Hemmstück, eine Brücke, ein Spiralklötzchen und/oder ein Tourbillon, aus einer Legierung hergestellt ist, die als Hauptbestandteile Kobalt, Chrom, Eisen und Nickel, und aufweist.

14. Uhr oder Messinstrument aufweisend Einzelteile zumindest teilweise aus Metall, wobei alle Einzelteile der Uhr oder des Messinstruments eine relative magnetische Permeabilität kleiner als 1,01 aufweisen, wobei die Uhr oder das Messinstrument mindestens eine Welle (12, 21, 24, 26, 33, 34, 41) nach Anspruch 1 aufweist.

15. Verfahren zur Herstellung eines mechanischen Uhrwerks aufweisend: Herstellen der Einzelteile des mechanischen Uhrwerks, wobei die Einzelteile zumindest teilweise aus Metall sind und jedes Einzelteil eine relative magnetische Permeabilität kleiner als 1,01 aufweist, wobei das mechanische Uhrwerk eine Welle (12, 21, 24, 26, 33, 34, 41) aufweist; und Zusammenbauen der Einzelteile zu einem mechanischen Uhrwerk; **dadurch gekennzeichnet, dass** die Welle (12, 21, 24, 26, 33, 34, 41) aus einem Berylliumkupfer (5) hergestellt wird und mit einer die Härte des Berylliumkupfers vergrössernden auf das Berylliumkupfer (5) aufgetragenen Beschichtung (6) gehärtet wird.

## Claims

1. A metal shaft for a mechanical movement or measuring instrument having a relative magnetic permeability of less than 1.01, **characterized in that** the shaft (12, 21, 24, 26, 33, 34, 41) is made of a beryllium copper (5) and is coated with a coating (6) which increases the hardness of the beryllium copper (5) and is applied to the beryllium copper (5).

2. A shaft according to claim 1, wherein the beryllium copper (5) contains at least 0.2% lead.

3. A shaft according to claims 1 or 2, wherein the coating (6) is a nickel layer.

4. A shaft according to claim 3, wherein the nickel layer has a phosphorus content of more than 10%.

5. A shaft according to any one of claims 1 to 4, wherein the nickel layer is a chemical nickel layer.

6. A shaft according to any one of claims 1 to 5, wherein the coating (6) is an amorphous metal.

7. A shaft according to any one of claims 1 to 6, wherein said shaft is a pinion shaft (21, 24, 26, 33).

8. A shaft according to claim 7, the pinion shaft (21, 24, 26, 33) comprising a pinion (22) and a shaft, wherein the pinion (22) and the shaft of the pinion shaft (21, 24, 26, 33) form a unit made of a block of material.

9. A shaft according to claims 1 to 8, said shaft (12, 21, 24, 26, 32, 33, 41) being a balance shaft (41) for rotatably supporting the balance, an escapement shaft (34) for rotatably supporting the escapement (32), a drive shaft (12) for rotatably supporting the drive mechanism (1) or a winding shaft for rotatably supporting the winding mechanism.

10. A mechanical movement having metallic parts, each part of said mechanical movement having a relative magnetic permeability of less than 1.01, the mechanical movement having at least one shaft (12, 21, 24, 26, 33, 34, 41) according to claim 1.

11. A mechanical movement according to claim 2, wherein the beryllium copper (5) of the shaft (12, 21, 24, 26, 33, 34, 41) contains at least 0.2% lead.

12. A mechanical movement according to any one of claims 10 to 11, wherein the coating (6) is a nickel layer.

13. A mechanical movement according to any of claims 10 to 12, wherein at least one part, in particular a spring, an escape wheel, an escapement piece, a bridge, a spiral block and/or a tourbillon, is made of an alloy which has cobalt, chromium, iron and nickel as main components.

14. A clock or measuring instrument comprising individual parts at least partially made of metal, wherein all individual parts of the clock or measuring instrument have a relative magnetic permeability of less than 1.01, wherein the watch or measuring instrument comprises at least one shaft according to claim 1.

15. A method of manufacturing a mechanical movement comprising:
manufacturing the components of the mechanical movement, said components being at least partially made of metal and each component having a relative magnetic permeability of less than 1.01, said mechanical movement comprising a shaft (12, 21, 24, 26, 33, 34, 41); and
assembling the individual parts to form a mechanical movement;
**characterised in that** the shaft (12, 21, 24, 26, 33, 34, 41) is made of a beryllium copper (5) and is hardened with a coating (6) which increases the hardness of the beryllium copper and is applied to the beryllium copper (5).

## Revendications

1. Arbre métallique destiné à un mécanisme d'horlogerie ou un instrument de mesure, ledit arbre ayant une perméabilité magnétique relative inférieure à 1,01, l'arbre (12, 21, 24, 26, 33, 34, 41) étant en cuivre au béryllium (5), **caractérisé en ce que** l'arbre (12, 21, 24, 26, 33, 34, 41) est revêtu d'un revêtement (6) augmentant la dureté du cuivre au béryllium (5) et appliqué sur le cuivre au béryllium (5).

2. Arbre selon la revendication 1, le cuivre au béryllium (5) contenant au moins 0,2 % de plomb.

3. Arbre selon la revendication 1 ou 2, le revêtement (6) étant une couche de nickel.

4. Arbre selon la revendication 3, la couche de nickel ayant une teneur en phosphore supérieure à 10 %.

5. Arbre selon l'une des revendications 1 à 4, la couche de nickel étant une couche de nickel chimique.

6. Arbre selon l'une des revendications 1 à 5, le revêtement (6) étant un métal amorphe.

7. Arbre selon l'une des revendications 1 à 6, l'arbre étant un arbre de pignon (21, 24, 26, 33).

8. Arbre selon la revendication 7, l'arbre de pignon (21, 24, 26, 33) comportant un pignon (22) et un arbre, le pignon (22) et l'arbre de l'arbre de pignon (21, 24, 26, 33) formant une unité réalisée à partir d'un bloc de matière.

9. Arbre selon l'une des revendications 1 à 8, l'arbre (12, 21, 24, 26, 32, 33, 41) étant un arbre d'équilibrage (41) destiné à supporter à rotation les balanciers, un arbre de pièce d'échappement (34) destiné à supporter en rotation la pièce d'échappement (32), un arbre d'entraînement (12) destiné à supporter à rotation le mécanisme d'entraînement (1) ou un arbre de remontoir destiné à supporter à rotation le mécanisme de remontage.

10. Mécanisme d'horlogerie à pièces métalliques, chaque pièce du mécanisme d'horlogerie ayant une perméabilité magnétique relative inférieure à 1,01, le mécanisme d'horlogerie comportant au moins un arbre {12, 21, 24, 26, 33, 34, 41) selon la revendication 1.

11. Mécanisme d'horlogerie selon la revendication 10, le cuivre au béryllium (5) de l'arbre (12, 21, 24, 26, 33, 34,41) contenant au moins 0,2 % de plomb.

12. Mécanisme d'horlogerie selon l'une des revendications 10 et 11, le revêtement (6) étant une couche de nickel.

13. Mécanisme d'horlogerie selon l'une des revendications 10 à 12, au moins une pièce, en particulier un ressort, une roue d'échappement, une pièce d'échappement, un pont, un piton à spirale et/ou un tourbillon, étant fabriquée à partir d'un alliage qui contient comme constituants principaux du cobalt, du chrome, du fer et du nickel.

14. Article d'horlogerie ou instrument de mesure comprenant des pièces individuelles au moins partiellement en métal, toutes les pièces individuelles de l'article d'horlogerie ou de l'instrument de mesure ayant une perméabilité magnétique relative inférieure à 1,01, l'article d'horlogerie ou l'instrument de mesure comportant au moins un arbre (12, 21, 24, 26, 33, 34, 41) selon la revendication 1.

15. Procédé de fabrication d'un mécanisme d'horlogerie comprenant : la fabrication de pièces individuelles du mécanisme d'horlogerie, les pièces individuelles étant au moins partiellement en métal et chaque pièce individuelle ayant une perméabilité magnétique relative inférieure à 1,01, le mécanisme d'horlogerie comportant un arbre (12, 21, 24, 26, 33, 34, 41) ; et l'assemblage des pièces individuelles pour former un article d'horlogerie ; **caractérisé en ce que** l'arbre (12, 21, 24, 26, 33, 34, 41) est fabriqué à partir d'un cuivre au béryllium (5) et est durci avec un revêtement (6) appliqué sur le cuivre au béryllium (5) et augmentant la dureté du cuivre au béryllium.
